# EUROPÄISCHE PATENTSCHRIFT

(11) **EP 3 634 739 B1**
(45) Veröffentlichungstag und Bekanntmachung des Hinweises auf die Patenterteilung: **27.07.2022**
(21) Anmeldenummer: 19700214.0
(22) Anmeldetag: 07.01.2019
(51) Int. Cl.: B32B 3/30, B32B 21/00, B60R 13/02, B29C 45/14

(54) **DEKORANORDNUNG FÜR EINE INNENVERKLEIDUNG EINES KRAFTFAHRZEUGES SOWIE VERFAHREN ZUR HERSTELLUNG EINER SOLCHEN**
DECORATIVE ARRANGEMENT FOR AN INTERIOR LINING OF A MOTOR VEHICLE AND METHOD FOR PRODUCING SAME
ARRANGEMENT DÉCORATIF POUR UN HABILLAGE INTÉRIEUR D'UN VÉHICULE AUTOMOBILE ET SON PROCÉDÉ DE FABRICATION

(30) Priorität: 17.01.2018 DE 102018100976
(43) Veröffentlichungstag der Anmeldung: 15.04.2020
(73) Patentinhaber: HIB Trim Part Solutions GmbH, 76646 Bruchsal (DE)
(72) Erfinder: SCHNABEL, Uwe, 76646 Bruchsal (DE); SIEBER, Volker, 76307 Karlsbad (DE)
(74) Vertreter: Staeger & Sperling Partnerschaftsgesellschaft mbB
(86) Internationale Anmeldenummer: PCT/EP2019/050265
(87) Internationale Veröffentlichungsnummer: WO 2019/141531

(56) Entgegenhaltungen:
- EP-A1- 3 106 300
- DE-A1-102017 100 691

## Beschreibung

Die Erfindung betrifft eine Dekoranordnung für eine Innenverkleidung eines Kraftfahrzeuges mit einer Trägerschicht, einer auf der Trägerschicht vorgesehenen Dekorschicht und einer auf der Dekorschicht vorgesehenen Schutzschicht, wobei die Dekorschicht aus einem Holz- oder Holzfurnier-Werkstoff besteht und wobei im Bereich der Dekorschicht eine Metallstruktur vorgesehen ist. Des Weiteren betrifft die Erfindung ein Verfahren zur Herstellung einer derartigen Dekoranordnung.

Die Innenverkleidung eines Kraftfahrzeuges bestimmt zu einem großen Teil den Eindruck, den ein Fahrzeugnutzer hinsichtlich der Wertigkeit und Funktionalität des Kraftfahrzeuges erhält. Insbesondere Dekoranordnungen für das Armaturenbrett oder für Türeinlagen bieten hierbei die Möglichkeit das Kraftfahrzeug entsprechend Kundenwünschen zu individualisieren. Hierzu wurde eine neue Dekoranordnung entwickelt, die auch unter dem Namen "Mesh"-Optik bekannt ist. Hierbei ist eine Dekorschicht aus einem Holz- oder Holzfurnier-Werkstoff hergestellt, in dessen Bereich eine Metallstruktur, möglichst bestehend aus schmalen Metallstegen, vorgesehen ist. Um eine derartige Dekoranordnung herzustellen, ist es beispielsweise aus der DE 20 2004 021 271 U1 bekannt, eine Metallstruktur auf einem Holzwerkstoff aufzubringen und mittels einer Schutzschicht auf diesem Holzwerkstoff zu verkleben. Es sollte deutlich sein, dass mit einem derartigen Herstellungsverfahren zwar die beiden Materialien miteinander verbunden werden können, jedoch kein exakter, qualitativ hochwertiger, einheitlicher Gesamteindruck erzeugt werden kann. Darüber hinaus können kleinste Einschlüsse der Schutzschicht mit der Holzschicht zu unerwünschten Unregelmäßigkeiten führen. Auch ist die Anzahl der verschiedenen Metallstruktur-Designs aufgrund der notwendigen Ausführung der Metallstruktur als Drahtgewebe sehr beschränkt. Um ein derartiges Drahtgewebe verarbeiten zu können, ist darüber hinaus eine Mindestdicke des Drahtes im Millimeterbereich zu gewährleisten.

Weiter ist beispielsweise aus der EP 3 106 300 A1 ein Mehrschichtverbund mit einer dekorativen Schicht bekannt, in welche durch Pressen dekoratives Material eingebracht wird.

Aufgabe der Erfindung ist es daher, eine Dekoranordnung und ein Verfahren zur Herstellung einer derartigen Dekoranordnung bereitzustellen, die die oben genannten Nachteile auf einfache und kostengünstige Weise vermeiden.

Diese Aufgabe wird durch eine erfindungsgemäße Dekoranordnung gemäß Anspruch 1 gelöst. Dabei ist eine Metallstruktur in eine Dekorschicht eingelegt, wobei die Metallstruktur aus einer Metallpaste hergestellt ist. Hierdurch wird ein echter Verbund der Metallstruktur mit dem Holz- oder Holfurnier-Werkstoff hergestellt. In besonders vorteilhafter Weise ist hierbei die Metallstruktur aus Metallstegen aufgebaut, die eine maximale Breite von 0,5 mm, vorzugsweise 0,2 mm, aufweisen.

Um eine besondere hohe Flexibilität hinsichtlich der Ausbildung der Metallstruktur zu gewährleisten, ist die Metallstruktur aus der Metallpaste hergestellt.

In vorteilhafter Weise ist die Trägerschicht zumindest teilweise aus Kunststoff hergestellt.

Die Schutzschicht ist in vorteilhafter Weise aus einem transparenten Lack hergestellt.

Dadurch, dass die Dekorschicht sichtabgewandt eine Kaschierung aufweist, ist es besonders einfach möglich die Dekorschicht zu verformen, um sie an bestimmte Innenverkleidungsteile anzupassen.

Sichtseitig kann die Dekorschicht in vorteilhafter Weise eine Lackschicht aufweisen.

Die Aufgabe wird ebenfalls durch ein Verfahren zur Herstellung einer derartigen Dekoranordnung gelöst, wobei in einem ersten Schritt eine Dekorstruktur in die Dekorschicht mittels Spritzprägen eingeprägt wird, wobei die Dekorschicht in ein Spritzprägewerkzeug gelegt wird und auf die sichtabgewandte Seite mittels flüssigem Kunststoff einen Spritzdruck erzeugt, wodurch eine gewünschte Dekorstruktur in die Dekorschicht eingeprägt wird, wobei der Kunststoff nach Aushärtung die Trägerschicht bildet, wobei in einem zweiten Schritt die Dekorstruktur mit einer Metallpaste gefüllt wird, wobei in einem dritten Schritt die Dekorschicht mit der Metallstruktur auf Sollmaß bearbeitet wird und wobei in einem vierten Schritt die Schutzschicht auf die Dekorschicht mit der Metallstruktur aufgebracht wird.

Durch ein derartiges Verfahren sind besonders schmale Metallstege und Ornamente der Metallstruktur herstellbar. So kann die minimale Breite ca. 0,2 mm betragen.

In vorteilhafter Weise kann die Dekorschicht vor dem ersten Schritt in eine 3D-Geometrie umgeformt werden.

Auch kann es vorteilhaft sein, wenn vor dem zweiten Schritt die überprägten Teile der Dekorschicht abgetragen werden. Hierdurch werden besonders scharfe Ränder gewährleistet. Auch ist es möglich, dass nach dem Abtragen der überprägten Teile die Dekorschicht durch Schleifen, Beizen und/oder Versiegeln behandelt wird. In besonders vorteilhafter Weise weist das Spritzprägewerkzeug eine Tiefenkontur TWK auf, wobei TWK > TSDK, was der Tiefen-Sollkontur der Dekorstruktur entspricht. Hierdurch werden überprägte Teile über die gesamte Oberfläche der Dekorstruktur erzeugt, wodurch klare, scharfkantige Ränder gewährleistet sind.

Die Erfindung wird anhand einer Zeichnung näher dargestellt, hierbei zeigt:
- Figur 1: eine schematisierte Vorderansicht eines Kfz-Armaturenbrettes mit einer erfindungsgemäßen Dekoranordnung,
- Figur 2: eine schematische Ansicht eines Spritzpräge-Werkzeuges mit eingelegter Dekoranordnung,
- Figur 3: eine schematische Ansicht einer spritz geprägten Dekoranordnung mit eingelegter Metallstruktur, und
- Figur 4: eine schematische Darstellung einer mit einer Schutzschicht versehenden Dekoranordnung.

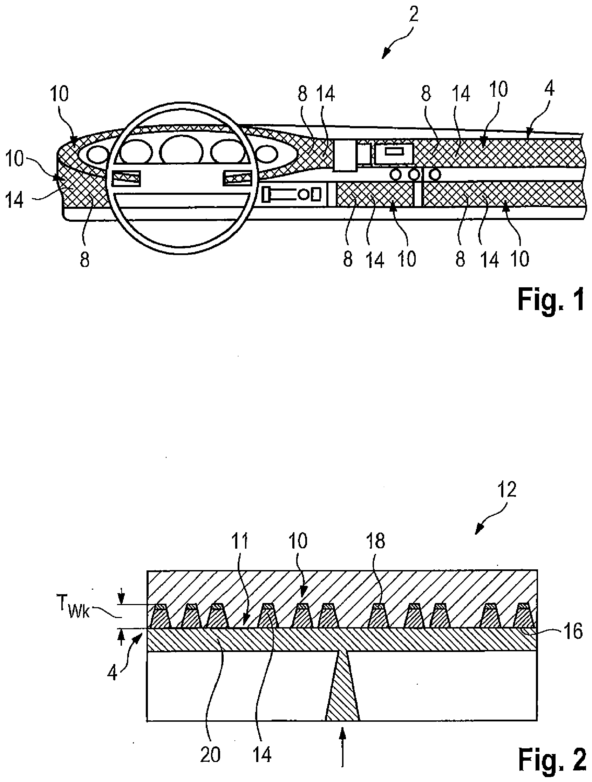

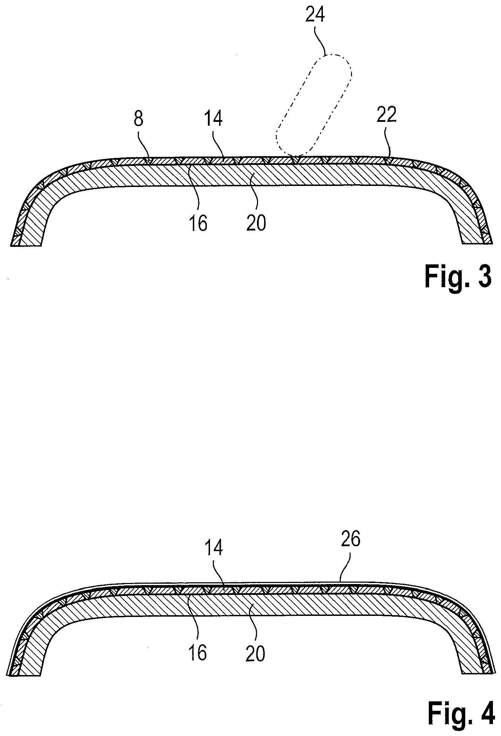

Figur 1 zeigt in einer schematischen Ansicht ein an sich bekanntes Armaturenbrett 2 mit einer erfindungsgemäßen Dekoranordnung 4, die in einer sogenannten "Mesh"-Optik ausgeführt ist. Hierzu ist in einer Dekorschicht 14, die unter anderem aus einem Holzfurnier-Werkstoff besteht, eine Metallstruktur 8 eingelegt. Die Metallstruktur 8 ist hierbei aus Metallstegen aufgebaut, die eine minimale Breite von 0,2 mm aufweisen. Die Metallstruktur 8 wird durch eine an sich bekannte Metallpaste 22 (siehe hierzu Figur 3) hergestellt, mit der eine Dekorstruktur 10 mit spritzgeprägten Nuten 11 (siehe hierzu insbesondere Figur 2) ausgefüllt wird.

Figur 2 zeigt nun in schematischer Ansicht die Dekoranordnung 4 in einem Spritzpräge-Werkzeug 12. Die Dekoranordnung 4 weist, wie bereits unter Figur 1 erläutert, eine Dekorschicht 14 aus einem Holzfurnier-Werkstoff auf. Auf der sichtabgewandten Seite besitzt die Dekorschicht 14 auf bekannte Weise eine Kaschierung 16. Sichtseitig ist auf der Dekorschicht 14 eine Lackschicht 18 vorgesehen, die insbesondere verhindern soll, dass beim Ausfüllen der Nuten 11 mit der Metallpaste 8 die Dekorschicht 14 verunreinigt wird. Beim Verfahren zur Herstellung der erfindungsgemäßen Dekoranordnung 4, wird die beschriebene Dekorschicht 14 in das Spritzpräge-Werkzeug 12 eingelegt und die sichtabgewandte Seite der Dekorschicht 14, die mit der Kaschierung 16 versehen ist, mittels eines flüssigen Kunststoffes mit einem Spritzdruck beaufschlagt, wodurch die gewünschte Dekorstruktur 10, bestehend aus den Nuten 11 in die Dekorschicht 14 eingeprägt wird. Der eingespritzte Kunststoff bildet dann nach Aushärtung eine Trägerschicht 20 für die Dekoranordnung 4. Um eine gewünschte 3D-Geometrie aufzuweisen, ist es vorteilhaft, die Dekorschicht 14 vor dem beschriebenen ersten Schritt umzuformen. Das Spritzpräge-Werkzeug 12 sollte eine Tiefenkontur T_{Wk} besitzen, die größer als eine Tiefen-Sollkontur T_{SWk} der Nuten 11 der Dekorstruktur ist. Auf diese Weise wird sichergestellt, dass über den gesamten Bereich der Dekorstruktur 10 eine Überprägung stattfindet, die in einem nachgeschalteten Abtragevorgang beseitigt wird, um möglichst scharfkantige Ränder der Nuten 11 zu erhalten, wodurch ein exaktes und genaues Bild der Metallstruktur 8 gewährleistet ist. Hierzu ist es möglich aber nicht notwendig, dass vor dem nächsten Abschnitt beschriebenen zweiten Schritt überprägte Teile der Dekorschicht 14 abgetragen werden.

Wie in Figur 3 gezeigt, werden dann im zweiten Schritt die Nuten 11 der Dekorstruktur 10 mit einer Metallpaste 22 gefüllt und in einem dritten Schritt die Dekorschicht 14 mit der Metallstruktur 8 auf ein gewünschtes Sollmaß, hier mittels eines Schleifwerkzeuges 24 bearbeitet. Falls gewünscht, kann hierbei die aufgebrachte Lackschicht 18 weitestgehend entfernt werden, um nach dem Abtragen der überprägten Teile die Dekorschicht 14 durch Schleifen, Beizen und/oder Versiegeln zu behandeln und hierdurch den Farbton der Dekorschicht 14 zu beeinflussen. Gleichzeitig kann natürlich auch noch der Glanzgrad der Metallstruktur 8 beeinflusst werden.

Im letzten und vierten Schritt, wie in Figur 4 gezeigt, wird dann eine Schutzschicht 26, die im vorliegenden Ausführungsbeispiel ein Klarlack ist, auf die Dekorschicht 14 mit der Metallstruktur 8 aufgebracht.

## Patentansprüche

1. Dekoranordnung für eine Innenverkleidung eines Kraftfahrzeuges mit einer Trägerschicht (20), einer auf der Trägerschicht (20) vorgesehenen Dekorschicht (14) und einer auf der Dekorschicht (14) vorgesehenen Schutzschicht (26), wobei die Dekorschicht (14) aus einem Holz- oder Holzfurnier-Werkstoff besteht und wobei im Bereich der Dekorschicht (14) eine Metallstruktur (8) vorgesehen ist, **dadurch gekennzeichnet, dass** die Metallstruktur (8) in der Dekorschicht (14) eingelegt ist, wobei die Metallstruktur (8) aus einer Metallpaste (22) hergestellt ist.

2. Dekoranordnung nach Anspruch 1, **dadurch gekennzeichnet, dass** die Metallstruktur (8) aus Metallstegen aufgebaut ist, die eine maximale Breite von 0,5 mm, vorzugsweise 0,2 mm, aufweisen.

3. Dekoranordnung nach einem der Ansprüche 1 - 2, **dadurch gekennzeichnet, dass** die Trägerschicht (20) zumindest teilweise aus Kunststoff hergestellt ist.

4. Dekoranordnung nach einem der Ansprüche 1 - 3, **dadurch gekennzeichnet, dass** die Schutzschicht (26) aus einem transparenten Lack hergestellt ist.

5. Dekoranordnung nach einem der vorhergehenden Ansprüche, **dadurch gekennzeichnet, dass** die Dekorschicht (14) sichtabgewandt eine Kaschierung (16) aufweist.

6. Dekoranordnung nach einem der vorhergehenden Ansprüche, **dadurch gekennzeichnet, dass** die Dekorschicht (14) sichtseitig eine Lackschicht (18) aufweist.

7. Verfahren zur Herstellung einer Dekoranordnung (4) nach einem der vorhergehenden Ansprüche, **dadurch gekennzeichnet, dass** in einem ersten Schritt eine Dekorstruktur (10) in die Dekorschicht (14) mittels Spritzprägen eingeprägt wird, wobei die Dekorschicht (14) in ein Spritzprägewerkzeug (12) gelegt wird und auf die sichtabgewandte Seite mittels flüssigem Kunststoff einen Spritzdruck erzeugt, wodurch eine gewünschte Dekorstruktur (10) in die Dekorschicht (14) eingeprägt wird, wobei der Kunststoff nach Aushärtung die Trägerschicht (20) bildet, dass in einem zweiten Schritt die Dekorstruktur (10) mit einer Metallpaste (22) gefüllt wird, dass in einem dritten Schritt die Dekorschicht (14) mit der Metallstruktur (8) auf Sollmaß bearbeitet wird und dass in einem vierten Schritt die Schutzschicht (26) auf die Dekorschicht (14) mit der Metallstruktur (8) aufgebracht wird.

8. Verfahren zur Herstellung einer Dekoranordnung (4) nach Anspruch 7, **dadurch gekennzeichnet, dass** die Dekorschicht (14) vor dem ersten Schritt in eine 3D-Geometrie umgeformt wird.

9. Verfahren zur Herstellung einer Dekoranordnung (4) nach Anspruch 7 oder 8, **dadurch gekennzeichnet, dass** beim Einprägen der Dekorstruktur (10) in die Dekorschicht (14) Teile der Dekorschicht (14) überprägt und vor dem zweiten Schritt die überprägten Teile der Dekorschicht (14) abgetragen werden.

10. Verfahren zur Herstellung einer Dekoranordnung nach Anspruch 9, **dadurch gekennzeichnet, dass** nach dem Abtragen der überprägten Teile die Dekorschicht (14) durch Schleifen, Beizen und/oder Versiegeln behandelt wird.

11. Verfahren zur Herstellung einer Dekoranordnung (4) nach einem der Ansprüche 7 oder 10, **dadurch gekennzeichnet, dass** das Spritzprägewerkzeug (12) eine Tiefenkontur T_{WK} aufweist, wobei T_{Wk} > T_{SWk}, was der Tiefen-Sollkontur der Dekorstruktur (10) entspricht.

## Claims

1. A decorative arrangement for an interior lining of a motor vehicle, having a carrier layer (20), a decorative layer (14) provided on the carrier layer (20), and a protective layer provided on the decorative layer (14), wherein the decorative layer (14) is composed of a wood or wood veneer material, and wherein in the region of the decorative layer (14), a metal structure (8) is provided, **characterized in that** the metal structure (8) is inlaid into the decorative layer (14), wherein the metal structure (8) is produced from a metal paste (22).

2. The decorative arrangement according to Claim 1, **characterized in that** the metal structure (8) is constructed from metal strips that have a maximum width of 0.5 mm, preferably of 0.2 mm.

3. The decorative arrangement according to any of Claims 1-2, **characterized in that** the carrier layer (20) is produced at least partially from plastic.

4. The decorative arrangement according to any of Claims 1-3, **characterized in that** the protective layer (26) is produced from a transparent lacquer.

5. The decorative arrangement according to any of the preceding claims, **characterized in that** the decorative layer (14) has a lamination (16) facing away from view.

6. The decorative arrangement according to any of the preceding claims, **characterized in that** the decorative layer (14) has a lacquer layer (18) on the visible side.

7. A method for producing a decorative arrangement (4) according to any of the preceding claims, **characterized in that** in a first step, a decorative structure (10) is molded by means of injection-compression molding into the decorative layer (14), wherein the decorative layer (14) is placed in an injection-compression molding tool (12), and on the side facing away from view, an injection pressure is generated by means of liquid plastic, thereby molding a desired decorative structure (10) into the decorative layer (14), wherein after curing, the plastic forms the carrier layer (20), **in that** in a second step, the decorative structure (10) is filled with a metal paste (22), **in that** in a third step, the decorative layer (14) having the metal structure (8) is machined to the desired size, and that in a fourth step, the protective layer (26) is applied to the decorative layer (14) having the metal structure (8).

8. The method for producing a decorative arrangement (4) according to Claim 7, **characterized in that** the decorative layer (14) is reshaped into a 3D geometry prior to the first step.

9. The method for producing a decorative arrangement (4) according to Claim 7 or 8, **characterized in that**, when molding the decorative structure (10) into the decorative layer (14), parts of the decorative layer (14) are overmolded and prior to the second step, the overmolded parts of the decorative layer (14) are removed.

10. The method for producing a decorative arrangement according to Claim 9, **characterized in that** after removal of the overmolded parts, the decorative layer (14) is treated by grinding, staining, and/or sealing.

11. The method for producing a decorative arrangement (4) according to either Claim 7 or Claim 10, **characterized in that** the injection-compression molding tool (12) has a depth contour T_{WK}, wherein T_{Wk} > T_{SWk}, which corresponds to the desired depth contour of the decorative structure (10).

## Revendications

1. Agencement décoratif destiné à un habillage intérieur d'un véhicule automobile, comprenant une couche de support (20), une couche décorative (14) prévue sur la couche de support et une couche de protection (26) prévue sur la couche décorative (14), la couche décorative (14) étant composée d'un matériau de bois ou de placage de bois, et une structure métallique (8) étant prévue au niveau de la couche décorative (14),
**caractérisé en ce que** la structure métallique (8) est insérée dans la couche décorative (14), la structure métallique (8) étant fabriquée en pâte de métal (22).

2. Agencement décoratif selon la revendication 1, **caractérisé en ce que** la structure métallique (8) est composée de bandes métalliques qui présentent une largeur maximale de 0,5 mm, de préférence de 0,2 mm.

3. Agencement décoratif selon l'une quelconque des revendications 1 à 2, **caractérisé en ce que** la couche de support (20) est fabriquée au moins partiellement en matière plastique.

4. Agencement décoratif selon l'une quelconque des revendications 1 à 3, **caractérisé en ce que** la couche de protection (26) est fabriquée en vernis transparent.

5. Agencement décoratif selon l'une quelconque des revendications précédentes, **caractérisé en ce que** la couche décorative (14) présente un laminage (16) sur la face cachée.

6. Agencement décoratif selon l'une quelconque des revendications précédentes, **caractérisé en ce que** la couche décorative (14) présente une couche de vernis (18) sur la face visible.

7. Procédé de fabrication d'un agencement décoratif (4) selon l'une quelconque des revendications précédentes, **caractérisé en ce que** dans une première étape, une structure décorative (10) est imprimée sur la couche décorative (14) par injection-compression, la couche décorative (14) étant placée dans un moule d'injection-compression (12) et produisant sur la face cachée une pression d'injection au moyen de la matière plastique liquide de façon à imprimer une structure décorative souhaitée (10) sur la couche décorative (14), la matière plastique formant après durcissement la couche de support (20), **en ce que** dans une deuxième étape, la structure décorative (10) est comblée à l'aide d'une pâte de métal (22), **en ce que** dans une troisième étape, la couche décorative (14) dotée de la structure métallique (8) est usinée selon une dimension de consigne, et **en ce que** dans une quatrième étape, la couche de protection (26) est appliquée à la couche décorative (14) dotée de la structure métallique (8).

8. Procédé de fabrication d'un agencement décoratif (4) selon la revendication 7, **caractérisé en ce que** la couche décorative (14) est transformée en géométrie 3D avant la première étape.

9. Procédé de fabrication d'un agencement décoratif (4) selon la revendication 7 ou 8, **caractérisé en ce que** lors de l'impression de la structure décorative (10) sur la couche décorative (14), des parties de la couche décorative (14) sont surimprimées, et les parties surimprimées de la couche décorative (14) sont enlevées avant la deuxième étape.

10. Procédé de fabrication d'un agencement décoratif selon la revendication 9, **caractérisé en ce qu'**après l'enlèvement des parties surimprimées, la couche décorative (14) est usinée par meulage, corrosion et/ou scellement.

11. Procédé de fabrication d'un agencement décoratif (4) selon l'une quelconque des revendications 7 ou 10, **caractérisé en ce que** le moule d'injection-compression (12) présente un contour de profondeur T_{WK}, T_{Wk} > T_{SWk}, ce qui correspond au contour de consigne de profondeur de la structure décorative (10).
